# EUROPÄISCHE PATENTANMELDUNG

(11) **EP 4 120 487 A1**
(43) Veröffentlichungstag der Anmeldung: **18.01.2023**
(21) Anmeldenummer: 22183937.6
(22) Anmeldetag: 08.07.2022
(51) Int. Cl.: H02B 1/04, H02B 1/052, H02G 3/10, H02B 1/42, H02G 3/32, H02B 1/03, H02G 3/08

(54) **MEDIAPLATTE FÜR DEN UNIVERSELLEN EINSATZ IN EINEM ZÄHLERSCHRANK**

(30) Priorität: 13.07.2021 DE 202021002363 U
(71) Anmelder: ABN GmbH, 74196 Neuenstadt (DE)
(72) Erfinder: HÖHN, Werner, 74196 Neuenstadt (DE); ORSAG, Andrej, 74196 Neuenstadt (DE); BRAUN, Andreas, 74196 Neuenstadt (DE)
(74) Vertreter: Schmid, Barbara

(57) **Zusammenfassung**

Die Erfindung betrifft eine Mediaplatte (220) mit einem rechteckigen Montagebereich (222), der an zumindest zwei Metallschienen (14) befestigt werden kann. Der Montagebereich (222) weist ein erstes Lochraster für die LexCom Home-Schnellbefestigung und ein zweites Lochraster in Form von kreisförmigen Durchbrüchen für eine Schraubbefestigung auf. Erfindungsgemäß ist an den seitlichen Kanten der Unterseite der Mediaplatte (222) zumindest ein Profilrasthaken vorhanden, der mit seiner Rastnase an der Unterseite der Metallschiene (14) verrastet werden kann. An der Rückseite der Rastnase ist eine Entriegelungsöse (244) vorhanden.

## Beschreibung

### TECHNISCHES GEBIET

Die Erfindung betrifft eine eine Mediaplatte für den universellen Einsatz in einem Zählerschrank. Die Montage einer Mediabox kann insbesondere an der Schnittstelle zwischen dem Hausübergabepunkt (HÜP) und dem Zählerplatz oder im Raum für Zusatzanwendungen (RfZ) erfolgen. In einer solchen Mediabox kann die Montage von zusätzlichen Betriebsmitteln des Netzbetreibers, des Messstellenbetreibers oder des Messdienstleisters erfolgen. Dabei kann es sich beispielsweise um ein "Smart Meter Gateway", um Kommunikationsanbindungen zum Hausübergabepunkt (LMN, HAN, WAN), um Tarifumschaltrelays, um Sicherungen oder um Schaltuhren handeln. Die Mediaplatte kann ebenfalls im Zählerschrank, jedoch außerhalb der oben genannten Funktionsräume in einem sogenannten Mediafeld des Zählerschranks montiert werden.

### STAND DER TECHNIK

Für den Einsatz in netzseitigen oder anlagenseitigen Anschlussräumen sind verschiedene Funktionsräume - beispielsweise RfZ-APZ-Räume - dem Grunde nach bekannt. Sie dienen der Montage von verschiedenen elektronischen Bauteilen und ermöglichen einen sicheren, störungsfreien und manipulationssicheren Betrieb.

### DARSTELLUNG DER ERFINDUNG

Ausgehend von diesem vorbekannten Stand der Technik liegt der Erfindung die Aufgabe zugrunde, eine verbesserte Mediaplatte anzugeben, die möglichst einfach, flexibel und sicher montiert und betrieben werden kann.

Die erfindungsgemäße Mediaplatte ist durch die Merkmale des Hauptanspruchs 1 sowie des nebengeordneten Anspruchs 7 gegeben. Sinnvolle Weiterbildungen der Erfindung sind Gegenstand von sich an diese Ansprüche anschließenden weiteren Ansprüchen.

Die erfindungsgemäße Mediaplatte besitzt einen rechteckigen Montagebereich, der an zumindest zwei Metallschienen des Feldprofils befestigt werden kann. Der Montagebereich weist ein erstes und ein zweites Lochraster für die Befestigung der gewünschten Bauteile auf. Das erste Lochraster ist für die "LexCom Home"-Schnellbefestigung geeignet, während das zweite Lochraster in Form von kreisförmigen Durchbrüchen ausgebildet ist. Ein solches zweites Lochraster kann für eine flexible Schraubbefestigung genutzt werden. Sofern mehrere Mediaplatten nebeneinander positioniert werden, läuft insbesondere das Lochraster für die "LexCom Home"-Schnellbefestigung über die verschiedenen Montagebereiche quasi endlos weiter. Dadurch können die Bauteile dem Grunde nach auch über mehrere Mediaplatten reichen.

Die Mediaplatte kann insbesondere aus Kunststoff bestehen und somit eine elektronische Isolation ermöglichen. Dadurch kann es nicht zu einer Spannungsverschleppung kommen. Darüber hinaus verhindert eine Mediaplatte aus Kunststoff gegenüber einer Mediaplatte aus Metall den Abschirmeffekt des WiFi-Signals eines Routers zur Rückseite hin und verbessert somit die Reichweite des WiFi-Signals in hinter der Montagefläche liegende Wohnräume. Entsprechende WLAN-Signale werden durch eine Mediaplatte aus Kunststoff daher lediglich geringfügig gedämpft.

Erfindungsgemäß ist an den seitlichen Kanten der Unterseite der Mediaplatte zumindest ein Profilrasthaken vorhanden, der mit seiner Rastnase an der Unterseite der Metallschiene verrastet werden kann. Um den Profilrasthaken lösen zu können, ist an der Rückseite der Rastnase eine Entriegelungsöse vorhanden. Die Entriegelungsöse kann mittels eines Werkzeugs wie beispielsweise eines Schraubendrehers nach hinten bewegt werden, so dass die Rastnase frei ist und die Mediaplatte von den Metallschienen entnommen werden kann.

Um eine Beschädigung des Profilrasthakens zu verhindern, kann ein Anschlag für die Entriegelungsöse vorhanden sein. Auf diese Weise kann die Entriegelungsöse und damit auch der Profilrasthaken nur um eine definierte Strecke bewegt werden. Eine zu starke Biegung des Profilrasthakens und eine damit einhergehende Bruchgefahr kann somit verhindert werden.

In einer vorteilhaften Ausführungsform kann ein entnehmbares Sperrteil vorhanden sein. Dieses Sperrteil kann im Bereich der Rückseite der Rastnase des Profilrasthakens positioniert werden, um eine Bewegung der Entriegelungsöse und damit auch eine Bewegung der Rastnase zu verhindern. Das Sperrteil ermöglicht daher auch bei größeren Belastungen eine sichere Befestigung der Mediaplatte an den Metallschienen.

Das Sperrteil kann zumindest ein senkrechtes Kragelement aufweisen, das zwischen der Rückseite der Rastnase und dem Anschlag positioniert werden kann. Dabei kann das senkrechte Kragelement den Raum zwischen der Rückseite der Rastnase und dem Anschlag nahezu vollständig ausfüllen, so dass eine Bewegung der Rastnase mit eingesetztem Sperrteil unmöglich ist. Vorzugsweise kann das Sperrteil ein brückenförmiges unteres Element aufweisen, das im Bereich des Profilrasthakens der Grundplatte positioniert werden kann. Das brückenförmige untere Element kann dabei zwei senkrechte Kragelemente aufweisen, die jeweils so neben der Entriegelungsöse positioniert werden, dass eine Bewegung der Rastnase nach hinten verhindert werden kann. Darüber hinaus kann das waagrechte Verbindungselement des brückenförmigen Elements oberhalb der Entriegelungsöse positioniert werden, so dass die Entriegelungsöse von oben abgedeckt und damit nicht länger zugänglich ist.

Soll die Mediaplatte dagegen wieder entfernt werden, muss lediglich das Sperrteil entnommen werden. Dies kann so gestaltet sein, dass für die Entnahme und Positionierung des Sperrteils keine Werkzeuge erforderlich sind. Vorzugsweise kann das Sperrteil zumindest eine Rastnase aufweisen, über die eine lösbare Befestigung des Sperrteils an der Mediaplatte möglich ist. Wird die zumindest eine Rastnase manuell wieder gelöst, kann das Sperrteil einfach und rasch entfernt werden.

Zur einfachen und raschen Positionierung des Mediaplatte auf den Metallschienen kann an der Unterseite der Mediaplatte zumindest ein Justierdorn vorhanden sein. Dieser Justierdorn kann in eine der Aussparungen der Metallschienen eingesteckt werden. Vorzugsweise können an beiden seitlichen Kanten der Grundplatte jeweils zwei Justierdorne vorhanden sein, die mit einem gewissen gegenseitigen Abstand zueinander angeordnet sind.

Die Mediaplatte kann über einen plattenförmigen Berührschutz verfügen, der unterhalb des Montagebereichs angeordnet ist. Durch diesen Berührschutz können die Öffnungen des Montagebereichs abgedeckt werden. An der Unterseite des Berührschutzes können Kabelhalter angeordnet sein, um Kabel an der Mediaplatte fixieren und vorbei führen zu können.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine perspektivische Ansicht der erfindungsgemäßen Mediaplatte,
- Fig. 2: eine perspektivische Ansicht der Unterseite der Mediaplatte gemäß Fig. 1,
- Fig. 3: eine perspektivische Detailansicht des Seitenbereichs der Mediaplatte mit eingesetztem Sperrteil,
- Fig. 4: eine perspektivische Detailansicht der Unterseite der seitlichen Kante der Mediaplatte gemäß Fig. 3,
- Fig. 5: eine perspektivische Ansicht des Sperrteils,
- Fig. 6: eine perspektivische Detailansicht gemäß Fig. 4 mit eingesetztem Sperrteil,
- Fig. 7: eine perspektivische Ansicht des Berührschutzes mit Blick auf die Unterseite des Berührschutzes,
- Fig. 8: eine perspektivische Detailansicht eines Hutschienenhalters mit daran befestigten Hutschienen, der an der Mediaplatte befestigt werden kann,
- Fig. 9: eine perspektivische Ansicht des Hutschienenhalters gemäß Fig. 4 ohne Hutschienen und
- Fig. 10: eine perspektivische Ansicht der Unterseite des Hutschienenhalters gemäß Fig. 5.

### WEGE ZUM AUSFÜHREN DER ERFINDUNG

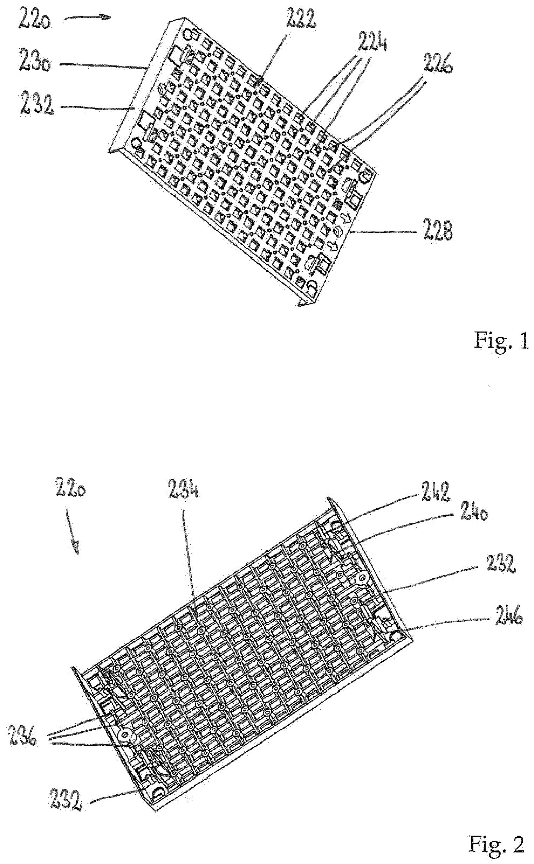

Eine erfindungsgemäße Mediaplatte 220 ist in Fig. 1 bis 3 dargestellt. Eine solche Mediaplatte 220 kann in einigen Anwendungsfällen statt einer Mediabox eingesetzt werden. Dies kann beispielsweise der Fall sein, wenn kein separater Berührschutz erforderlich ist.

Die Mediaplatte 220 besitzt einen rechteckigen Montagebereich 222. In dem Montagebereich 222 ist ein erstes Lochraster 224 vorhanden, das für eine "LexCom Home"-Schnellbefestigung ausgelegt ist. Darüber hinaus ist in dem Montagebereich 222 ein zweites Lochraster 226 vorhanden. Das zweite Lochraster 226 weist kreisförmige Durchbrüche auf und ist für eine flexible Schraubbefestigung von Bauteilen ausgelegt. Zusätzlich dazu können die Bauteile auch auf Hutschienen befestigt werden. Die Hutschienen selbst können in diesem Fall über Hutschienenhalter an der Mediaplatte befestigt werden.

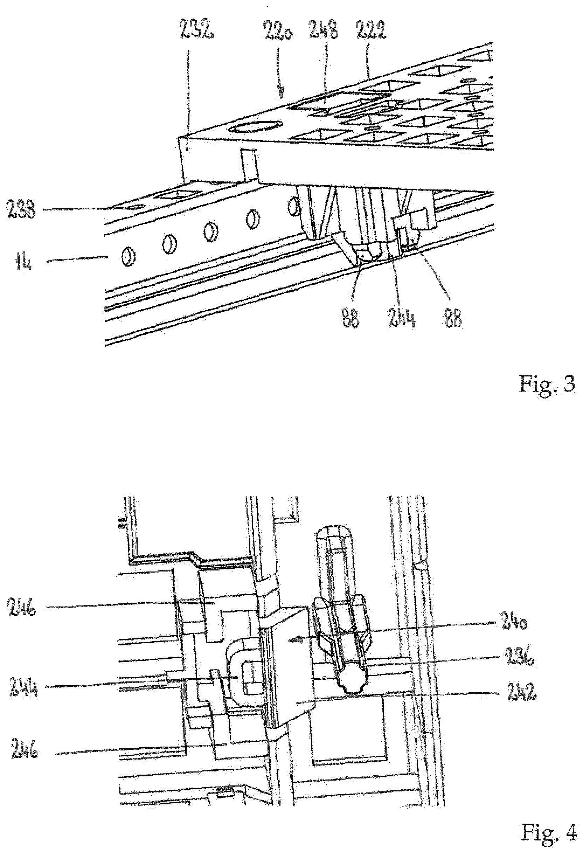

An den beiden seitlichen Kanten 228, 230 der Grundplatte 222 ist jeweils eine Schulterausprägung 232 vorhanden, die über zwei parallelen Metallschienen 14 positioniert werden kann. An der Unterseite 234 des Montagebereichs 222 sind im Bereich der Schulterausprägungen 232 beidseitig jeweils mehrere Justierzapfen 236 einteilig angeformt (siehe Fig. 4). Diese Justierzapfen 236 können in entsprechende Aussparungen 238 der Metallschienen 14 eingesetzt werden, so dass eine rasche und genaue Positionierung der Mediaplatte 220 auf den Metallschienen 14 möglich ist.

Abhängig von der Anzahl und Größe der gewünschten Bauteile kann auch die Größe der Mediaplatte variiert werden. Grundsätzlich ist es möglich, eine beliebige Anzahl an Mediaplatten 12 zu kombinieren.

Um die Mediaplatte 220 an den Metallschienen 14 zu befestigen, sind an der Unterseite 234 des Montagebereichs 222 im Bereich der Schulterausprägung 232 mehrere Profilrasthaken 240 mit einer Rastnase 242 einteilig angeformt (siehe Fig. 4).

Der Profilrasthaken 240 besitzt eine zu dem Justierzapfen 236 und damit auch zu den Metallschienen 14 hin gerichtete Rastnase 242. Die Rückseite der Rastnase 242 verläuft dabei parallel zu der Schulterausprägung 232, so dass die Rastnase 242 an der Unterseite 76 der Metallschiene 14 einrasten kann. An der Rückseite der Rastnase 242 ist mittig eine Entriegelungsöse 244 einteilig angeformt (siehe Fig. 4). Oberhalb der Entriegelungsöse 244 befindet sich jeweils eine Aussparung 248 in dem Montagebereich 222, so dass die Entriegelungsöse 244 durch den Montagebereich 222 hindurch mit einem Werkzeug, beispielsweise mit einem Schraubendreher, zugänglich ist. Mit einem solchen Werkzeug kann die Entriegelungsöse 244 ein Stück von der Metallschiene 14 weg bewegt werden, so dass die Rastnase 242 nicht länger an der Metallschiene 14 verrastet ist und die Mediaplatte 220 von der Metallschiene 14 abgehoben werden kann. Um zu verhindern, dass die Entriegelungsöse 244 zu weit nach hinten bewegt wird, ist hinter der Entriegelungsöse 244 beidseitig jeweils ein Kragsteg 246 als Anschlag vorhanden.

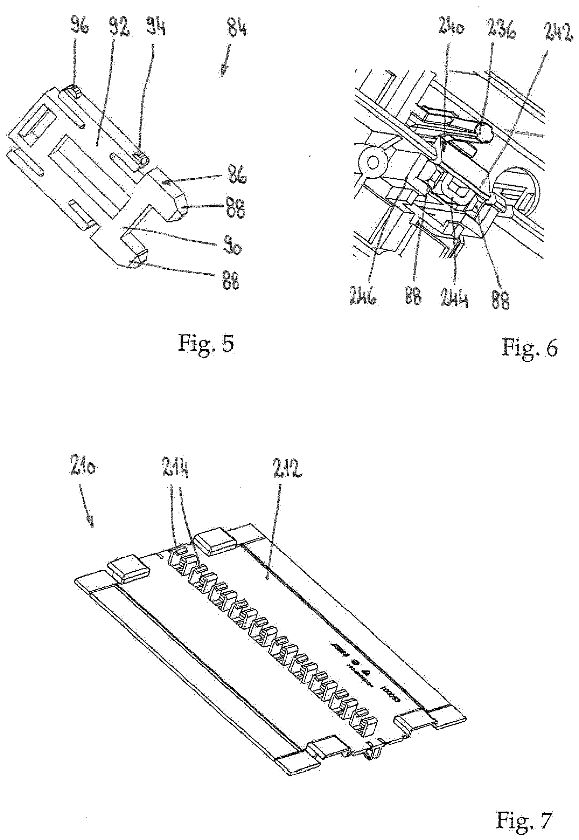

Bei größeren Zugbelastungen an der Mediaplatte kann die Rastnase 242 als alleinige Befestigung nicht ausreichend sein, da die Rastnase 242 durch die Zugbelastung gelöst werden kann. Daher ist ein Sperrteil 84 (siehe Fig. 5) vorhanden, durch das die Rastnase 242 in ihrer verrasteten Position lagefixiert werden kann (siehe Fig. 6).

Das Sperrteil 84 besitzt ein brückenförmiges unteres Element 86 mit zwei senkrechten Kragelementen 88 und mit einem waagrechten Verbindungselement 90. Dieses brückenförmige untere Element 86 kann in die Aussparung 248 des Montagebereichs 222 gesteckt werden, so dass das waagrechte Verbindungselement 90 oberhalb der Entriegelungsöse 244 positioniert ist. Die Entriegelungsöse 244 ist daher nicht mehr zugänglich. Darüber hinaus sind die beiden senkrechten Kragelemente 88 in dieser Position des Sperrteils 84 zwischen der Rückseite der Rastnase 242 und dem Kragsteg 246 positioniert. Daher wird die Rastnase 242 in ihrer verrasteten Position lagefixiert, so dass kein versehentliches Lösen der Rastnase 242 aufgrund zu großer Zugbelastung möglich ist. Oberhalb des brückenförmigen Elements 86 ist ein Mittelteil 92 vorhanden, das auch im eingesetzten Zustand über die Oberseite der Mediaplatte 220 ragt. An dem Mittelteil 92 ist beidseitig jeweils eine untere Rastnase 94 und eine obere Rastnase 96 vorhanden. Die beiden unteren Rastnasen 94 können an der Unterseite 234 des Montagebereichs 222 verrastet werden. Dadurch kann das Sperrteil 84 nicht versehentlich von der Mediaplatte 220 abfallen. Um das Sperrteil 84 von der Mediaplatte 220 zu entfernen, müssen vielmehr die beiden Rastnasen 94, 96 manuell gelöst werden.

Um die Mediaplatte 220 von der Rückseite her abzusichern, ist im vorliegenden Beispielsfall unterhalb des Montagebereichs 222 ein plattenförmiger Berührschutz 210 vorgesehen werden (siehe Fig. 7). Die Abmessungen des Berührschutzes 210 entsprechend dabei in etwa den Maßen der Mediplatte 220. An der Unterseite 212 des Berührschutzes 210 sind im vorliegenden Beispielsfall mehrere Kabelhalter 214 vorgesehen. Auf diese Weise können unterhalb der Mediaplatte 220 Kabel an der Mediaplatte 220 vorbei geführt und fixiert werden. Die Kabelhalter 214 ermöglichen dabei eine sichere Führung dieser zusätzlichen Kabel. Durch den Berührschutz 210 können sowohl das Lochraster 224 für die "LexCom Home"-Schnellbefestigung als auch das Lochraster 226 für die Schraubbefestigung abgedeckt werden.

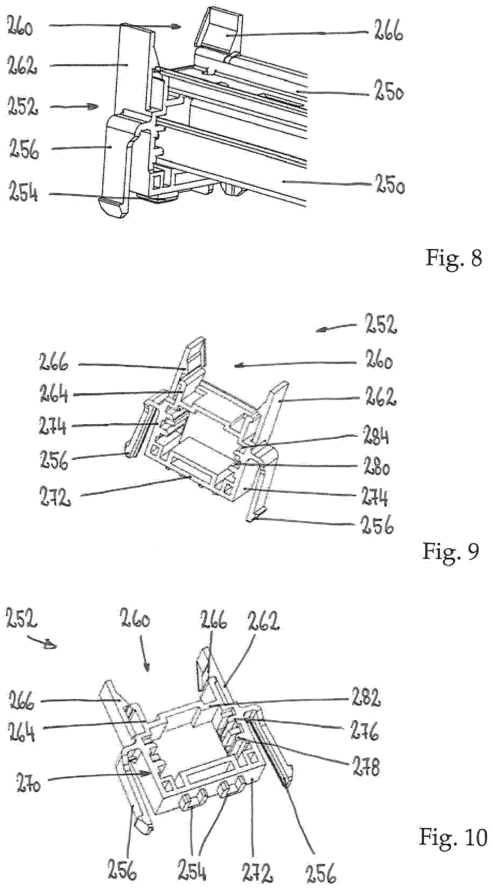

Um Hutschienen 250 an der Mediaplatte 220 befestigen zu können, kann ein Hutschienenhalter 252 (siehe Fig. 8 bis 10) eingesetzt werden. Der Hutschienenhalter 252 besitzt dazu zwei Fixierelemente 254, die jeweils in eine der "LexCom Home"-Ausnehmungen 224 der Mediaplatte 220 eingesteckt werden können. Darüber hinaus ist seitlich des Hutschienenhalters 252 beidseitig jeweils ein Rasthaken 256 vorhanden. Die beiden Rasthaken 256 können in weitere "LexCom Home"-Ausnehmungen 224 des Montagebereichs 222 eingesteckt werden, um den Hutschienenhalter 252 an der Mediaplatte 220 zu befestigen.

Der Hutschienenhalter 252 besitzt darüber hinaus eine U-förmige erste Aufnahmeeinheit 260 für eine Hutschiene 250. Die erste Aufnahmeeinheit 260 besitzt an ihren beiden seitlichen Schenkeln 262 jeweils eine nach innen weisende Schulterausprägung 264, die eine eingesetzte Hutschiene 250 von unten abstützen. Oberhalb der Schulterausprägungen 264 ist jeweils eine ebenfalls nach innen weisende Rastnase 266 einteilig an den seitlichen Schenkeln 262 angeformt. Die Hutschiene 250 kann somit von oben in die erste Aufnahmeeinheit 260 eingesteckt und zwischen der Rastnase 266 und der Schulterausprägung 264 klemmend gehalten werden. Am unteren Randbereich der beiden seitlichen Schenkel 262 der ersten Aufnahmeeinheit 260 sind die beiden Rasthaken 256 einteilig angeformt.

Unterhalb der ersten Aufnahmeeinheit 260 ist im vorliegenden Beispielsfall ein Rahmenelement 270 vorhanden. An der Unterseite des unteren waagrechten Schenkels 272 des Rahmenelement 270 sind die beiden Fixierelemente 254 einteilig angeformt. An den beiden seitlichen Wandelementen 274 des Rahmenelements 270 sind im vorliegenden Beispielsfall jeweils zwei nach innen weisende Führungsschienen 276, 278 einteilig angeformt. Dabei bilden die beiden Führungsschienen 276, 278 gemeinsam eine zweite Aufnahmeeinheit 280 für eine Hutschiene 250. So kann eine Hutschiene 250 mit ihrem Endbereich zwischen die beiden Führungsschienen 276, 278 eingeschoben und dort lagefixiert werden. Der obere waagrechte Schenkel 282 kann ebenfalls als Führungsschiene dienen und somit gemeinsam mit der oberen Führungsschiene 276 eine weitere Aufnahmeeinheit 284 für eine Hutschiene 250 bilden. Auch in diese Aufnahmeeinheit 284 kann eine Hutschiene 250 mit ihrem Endbereich eingeschoben werden. Durch die unterschiedlichen Aufnahmeeinheiten 280, 284 können Hutschienen 250 mit unterschiedlichen Abmessungen an dem Hutschienenhalter 252 befestigt werden. So können beispielsweise sowohl Hutschienen 250 mit einer Tiefe von 7,5 Millimetern als auch Hutschienen 250 mit einer Tiefe von 15 Millimetern an dem Hutschienenhalter 252 befestigt werden.

## Patentansprüche

1. Mediaplatte (220)
- mit einem rechteckigen Montagebereich (222), der an zumindest zwei Metallschienen (14) befestigbar ist,
- - wobei der Montagebereich (222) ein erstes Lochraster (224) für die LexCom Home-Schnellbefestigung und ein zweites Lochraster (226) in Form von kreisförmigen Durchbrüchen für eine Schraubbefestigung aufweist,
- **dadurch gekennzeichnet, dass**
- an den seitlichen Kanten (228, 230) der Unterseite (234) der Mediaplatte (222) zumindest ein Profilrasthaken (240) vorhanden ist, der mit seiner Rastnase (242) an der Unterseite der Metallschiene (14) verrastbar ist,
- an der Rückseite der Rastnase (242) eine Entriegelungsöse (244) vorhanden ist.

2. Mediaplatte nach Anspruch 1,
- **dadurch gekennzeichnet, dass**
- ein Anschlag (246) vorhanden ist, so dass die Entriegelungsöse (244) nur eine definierte Strecke bewegbar ist.

3. Mediaplatte nach Anspruch 1 oder 2,
- **dadurch gekennzeichnet, dass**
- ein entnehmbares Sperrteil (84) vorhanden ist,
- das Sperrteil (84) an der Rückseite der Rastnase (242) positionierbar ist, so dass eine Bewegung der Rastnase (242) verhinderbar ist.

4. Mediaplatte nach Anspruch 3,
- **dadurch gekennzeichnet, dass**
- das Sperrteil (84) zumindest ein senkrechtes Kragelement (88) aufweist, das zwischen der Rückseite der Rastnase (242) und dem Anschlag (246) positionierbar ist.

5. Mediaplatte nach Anspruch 3 oder 4,
- **dadurch gekennzeichnet, dass**
- das Sperrteil (84) ein brückenförmiges unteres Element (86) aufweist,
- die beiden senkrechten Kragelemente (88) des brückenförmigen Elements (86) neben der Entriegelungsöse (244) positionierbar sind, so dass eine Bewegung der Rastnase (242) verhinderbar ist,
- das waagrechte Verbindungselement (90) des brückenförmigen Elements (86) oberhalb der Entriegelungsöse (244) positionierbar ist, so dass die Entriegelungsöse (244) von oben abdeckbar ist.

6. Mediaplatte einem der Ansprüche 3 bis 5,
- **dadurch gekennzeichnet, dass**
- das Sperrteil (84) zumindest eine Rastnase (94, 96) zur lösbaren Befestigung des Sperrteils (84) an der Grundplatte (222) aufweist.

7. Mediaplatte nach dem Oberbegriff von Anspruch 1 oder nach einem der Ansprüche 1 bis 06,
- **dadurch gekennzeichnet, dass**
- an der Unterseite (234) der Grundplatte (222) zumindest ein Justierzapfen (236) vorhanden ist, der in eine Aussparung (238) der Metallschienen (14) einsteckbar ist.
